# EUROPÄISCHE PATENTANMELDUNG

(11) **EP 2 930 349 A1**
(43) Veröffentlichungstag der Anmeldung: **14.10.2015**
(21) Anmeldenummer: 15162270.1
(22) Anmeldetag: 01.04.2015
(51) Int. Cl.: F03B 17/06, F03D 3/06, F03D 3/04

(54) **FLUIDTURBINE**

(30) Priorität: 03.04.2014 DE 102014104727
(71) Anmelder: Cassius Advisors GmbH, 48157 Münster (DE)
(72) Erfinder: Behrens, Michael, 48157 Münster (DE)
(74) Vertreter: Werner & ten Brink

(57) **Zusammenfassung**

Es wird eine Fluidturbine 65 mit einem Rotor 16, der eine vertikale Drehachse 12 umfasst, an der mindestens zwei Rotorblättern 18, 20, 22 angeordnet sind, wobei der Rotor 16 in einem Gehäuse 70 angeordnet ist, wobei eine Oberseite 72 und eine Unterseite 74 des Gehäuses 70 im wesentlichen senkrecht zur Drehachse 12 angeordnet sind. Jedes Rotorblatt 18, 20, 22 weist mindestens eine erste Höhe 68 in einem ersten Abstand 69 parallel zur Drehachse 12 und eine zweite Höhe 66 in einem zweiten Abstand 67 parallel zur Drehachse 12 auf, wobei der erste Abstand 69 und die erste Höhe 68 kleiner sind als der zweite Abstand 67 und die zweite Höhe 66, bei der der Rotor 16 relativ zum Gehäuse 70 drehbar ist. Das Gehäuse 70 weist mindestens einen ersten Abstand 78 zwischen Ober- und Unterseite 72, 74 des Gehäuses 70 in einem ersten Abstand 69 parallel zur Drehachse 12 und einen zweiten Abstand 76 zwischen Ober- und Unterseite 72, 74 des Gehäuses 70 in einem zweiten Abstand 67 parallel zur Drehachse 12 auf, wobei der erste Abstand 69 parallel zur Drehachse 12 und der erste Abstand 78 zwischen Ober- und Unterseite 72, 74 des Gehäuses 70 kleiner sind als der zweite Abstand 67 parallel zur Drehachse 12 und der zweite Abstand 76 zwischen Ober- und Unterseite 72, 74 des Gehäuses 70. Bei dieser Fluidturbine 65 sind die ersten Höhen 68 und die zweiten Höhen 66 radialsymmetrisch angeordnet, und an der Oberseite 72 und/oder der Unterseite 74 des Gehäuses 70 ist mindestens ein Fluidschlitz 82 angeordnet. Die Fluidturbine 65 weist aufgrund der Gestaltung des Gehäuses 70 einen besonders hohen Wirkungsgrad auf.

## Beschreibung

Die vorliegende Erfindung bezieht sich auf eine Fluidturbine mit einem Rotor, der eine vertikale Drehachse umfasst, an der mindestens zwei Rotorblätter angeordnet sind, wobei der Rotor in einem Gehäuse angeordnet ist, und wobei eine Oberseite und eine Unterseite des Gehäuses im wesentlichen senkrecht zur Drehachse angeordnet sind, wobei jedes Rotorblatt mindestens eine erste Höhe in einem ersten Abstand parallel zur Drehachse und eine zweite Höhe in einem zweiten Abstand parallel zur Drehachse aufweist, wobei der erste Abstand und die erste Höhe kleiner sind als der zweite Abstand und die zweite Höhe, wobei der Rotor relativ zum Gehäuse drehbar ist,
wobei das Gehäuse mindestens einen ersten Abstand zwischen Ober- und Unterseite des Gehäuses in einem ersten Abstand parallel zur Drehachse und einen zweiten Abstand zwischen Ober- und Unterseite des Gehäuses in einem zweiten Abstand parallel zur Drehachse aufweist, wobei der erste Abstand parallel zur Drehachse und der erste Abstand zwischen Ober- und Unterseite des Gehäuses kleiner sind als der zweite Abstand parallel zur Drehachse und der zweite Abstand zwischen Ober- und Unterseite des Gehäuses.

Derartige Fluidturbinen werden zur Energiegewinnung aus Wasser-, Luft- oder anderen Fluidströmungen verwendet. Bei einem Rotor einer solchen Fluidturbine bewegt sich im Betrieb jeweils mindestens ein Rotorblatt in Richtung oder mit der Fluidströmung und mindestens ein Rotorblatt bewegt sich entgegen der Richtung der Fluidströmung oder gegen die Fluidströmung. Aus der DE 10 2009 042 536 A1 ist beispielsweise eine windangetriebene Turbine aus einem vertikal rotierenden Läufer mit angeschlossenen Rotorblättern, deren Form sich nach dem Innensegment des Gehäuses und dessen nach außen laufenden Radius richtet. Das Innensegment des Gehäuses verengt sich in Richtung des Läufers.

Aus der US 6,147,415 ist außerdem ein Permanentmagnet-Generator mit einem Windrotor bekannt. Der Windrotor weist Rotorblätter auf, die sowohl an der Vorderseite als auch an der Rückseite mehrere abgeschrägte Flächen umfassen, die den aus verschiedenen Richtungen auftreffenden Wind leiten sollen.

Es ist eine Aufgabe der vorliegenden Erfindung, eine Fluidturbine anzugeben, die einen hohen Wirkungsgrad aufweist.

Diese Aufgabe wird dadurch gelöst, dass die ersten Höhen und die zweiten Höhen radialsymmetrisch angeordnet sind und dass an der Oberseite und/oder der Unterseite des Gehäuses mindestens ein Fluidschlitz angeordnet ist.

Der mindestens eine Fluidschlitz ist derart angeordnet, dass Fluidströmung durch den Fluidschlitz auf die Vorderseite des Rotorblatts gelangen kann. Dadurch kann der Druck auf die Vorderseite des Rotorblatts erhöht werden. Als Vorderseite des Rotorblatts wird hier und im folgenden die Seite des Rotorblatts bezeichnet, auf die die Fluidströmung trifft, um dass Rotorblatt in Richtung der Fluidströmung zu bewegen. Da die erste Höhe und die zweite Höhe der Rotorblätter radialsymmetrisch angeordnet sind, verteilt sich auf jedem Rotorblatt der Druck, der durch das durch den Fluidschlitz strömende Fluid erzeugt wird, im wesentlich gleich. Der Fluidschlitz kann auch derart angeordnet sein, dass die Fluidströmung durch Passieren des Fluidschlitzes aufgrund des Bernoulli-Effekts einen Sog erzeugt, durch den das Fluid, z. B. Luft oder Wasser, aus dem Gehäuse aus dem Bereich der Rückseite des Rotorblatts gesaugt wird. Auf diese Weise kann der Strömungswiderstand bei der Rückführung des Rotorblatts verringert werden. Dies führt zu einer Verbesserung des Wirkungsgrads der Fluidturbine. Als Rückseite des Rotorblatts wird hier und im folgenden die Seite des Rotorblatts bezeichnet, die gegen die Fluidströmung zurückgeführt wird. Auch der auf der Rückseite aufgebaute Unterdruck verteilt sich aufgrund der radialsymmetrisch angeordneten ersten und zweiten Höhen über die Rotorblattflächen im Wesentlichen gleich.

Die Ober- und/oder Unterseite des Gehäuses kann eine beliebige, z. B. quadratische, runde, mehreckige oder vieleckige Form haben. Dadurch, dass der Abstand zwischen der Ober- und Unterseite des Gehäuses im Bereich der Drehachse geringer ist, als weiter entfernt von der Drehachse, entsteht der Venturi-Effekt, wodurch die Fluidströmung den Bereich nahe der Drehachse schneller in Richtung der Außenseite des Rotorblatts passiert. Die Fluidströmung übt aufgrund des Venturi-Effekts somit eine größere Druckkraft auf die Außenseite des Rotorblatts aus, die dort aufgrund der größeren Angriffsfläche stärker zum Tragen kommt als auf der drehachsennäheren Innenseite des Rotorblatts. Somit verbessert sich der Wirkungsgrad der Fluidturbine noch weiter.

Bevorzugt sind an der Oberseite und/oder an der Unterseite des Gehäuses mindestens zwei Fluidschlitze angeordnet. Der erste Fluidschlitz ist bevorzugt derart angeordnet, dass die Fluidströmung durch den ersten Fluidschlitz in das Gehäuse und auf die Vorderseite des Rotorblatts gelangt und auf dieses einen höheren Druck ausübt. Der zweite Fluidschlitz ist bevorzugt derart angeordnet, dass die Fluidströmung durch Passieren des Fluidschlitzes aufgrund des Bernoulli-Effekts einen Sog erzeugt, durch den das Fluid, z. B. Luft oder Wasser, aus dem Gehäuse aus dem Bereich der Rückseite des Rotorblatts gesaugt wird, wodurch der Strömungswiderstand bei der Rückführung des Rotorblatts verringert wird. Auf diese Weise kann der Wirkungsgrad der Fluidturbine noch weiter erhöht werden. In besonders bevorzugten Ausführungsformen sind mindestens zwei Fluidschlitze wie zuvor beschrieben an der Oberseite und an der Unterseite des Gehäuses angeordnet, wodurch sich der Wirkungsgrad der Fluidturbine verbessern kann.

Bevorzugt ist der Abstand zwischen der Oberseite des Gehäuses und den Rotorblättern und zwischen der Unterseite des Gehäuses und den Rotorblättern im Wesentlichen konstant. Dies ist am günstigsten für die Nutzung der Fluidströmung, da es keine Bereiche zwischen Rotorblatt und Ober- bzw. Unterseite des Gehäuses gibt, die die Fluidströmung beispielsweise schneller passiert als andere. Daher wird die Fluidströmung besonders gleichmäßig auf die Außenseite des Rotorblatts gelenkt.

In vorteilhaften Ausführungsformen umfasst mindestens ein Rotorblatt mindestens eine Öffnung mit einem öffenbaren Schließelement. Bevorzugt umfasst jedes Rotorblatt mindestens eine Öffnung mit einem öffenbaren Schließelement. Das Schließelement ist beispielsweise als Klappe an einer Seite des Rotorblatts derart angeordnet, dass das Schließelement die Öffnung aufgrund der Fluidströmung öffnet, wenn sich das Rotorblatt gegen die Fluidströmung bewegt. Dadurch wird der Strömungswiderstand des Rotorblatts bei Rückführung gegen die Fluidströmung verringert. Das Schließelement ist außerdem derart angeordnet, dass es die Öffnung aufgrund der Fluidströmung schließt, wenn sich das Rotorblatt in Richtung der Fluidströmung bewegt. Auf diese Weise bleibt der Strömungswiderstand des Rotorblatts bei der Aufnahme der Fluidströmung genauso hoch wie ohne die mindestens eine Öffnung im ersten Abschnitt des Rotorblatts. Dies wirkt sich weiter positiv auf den Wirkungsgrad des Rotors aus.

Bevorzugt umfasst mindestens ein Rotorblatt einen gekrümmten ersten Abschnitt, wobei der erste Abschnitt eine konkave Seite und eine konvexe Seite aufweist, wobei an dem der Drehachse abgewandten Ende des ersten Abschnitts des Rotorblatts ein gekrümmter zweiter Abschnitt angeordnet ist, wobei der zweite Abschnitt eine konkave Seite und eine konvexe Seite aufweist, und wobei die beiden Abschnitte derart angeordnet sind, dass in radialer Richtung auf die konvexe Seite des ersten Abschnitts die konkave Seite des zweiten Abschnitts folgt. Durch diese Anordnung des zweiten Abschnitts an dem ersten Abschnitt des Rotorblatts auf der konvexen Seite des ersten Abschnitts und der konkaven Seite des zweiten Abschnitts des Rotorblatts, im Folgenden zusammen auch als Vorderseite des Rotorblatts bezeichnet, entsteht besonders am der Drehachse abgewandten Ende des Rotorblatts ein besonders hoher Widerstand für eine dort auftreffende Fluidströmung. Da die Hebelwirkung dort nämlich am größten ist, findet die größte Kraftübertragung statt, so dass das Rotorblatt besonders effektiv in Richtung der Fluidströmung bewegt wird. Dagegen ist die sich gegen die Richtung der Fluidströmung bewegende Seite des Rotorblatts aufgrund der konkaven Seite des ersten Abschnitts und der konvexen Seite des zweiten Abschnitts, im Folgenden zusammen auch als Rückseite des Rotorblatts bezeichnet, besonders am der Drehachse abgewandten Ende des Rotorblatts, aerodynamischer und weist einen geringeren Strömungswiderstand auf.

Bevorzugt umfassen mehr als eins bzw. alle Rotorblätter einen ersten und zweiten Abschnitt wie oben beschrieben.

Das oder die Rotorblätter sind bevorzugt durchgehend, das heißt an einem Stück, ausgebildet. Dies hat den Vorteil, dass die Rotorblätter nicht auf ober- und/oder unterseitige Stützkonstruktionen angewiesen sind. Im Bereich der Drehachse des Rotors können in weiteren bevorzugten Ausführungsformen Ausnehmungen in dem oder jedem Rotorblatt vorgesehen sein, durch die die Fluidströmung hindurchströmen und sich somit nicht zu stark aufstauen kann.

Bevorzugt hat der Rotor drei Rotorblätter. Damit wird ein besonders hoher Wirkungsgrad bei vergleichsweise geringen Materialkosten erreicht. In alternativen Ausführungsformen können zwei, vier, fünf oder mehr Rotorblätter vorgesehen sein.

Vorteilhafterweise ist ein zwischen der konvexen Seite des ersten Abschnitts und der konkaven Seite des zweiten Abschnitts eingeschlossener Winkel kleiner als 120°, z. B. 110° oder 100°, bevorzugt kleiner als 90°, z. B. 80°. Dadurch entsteht eine schaufelartige Form des mindestens einen Rotorblatts, in die die Fluidströmung gelenkt wird und die der Fluidströmung einen erhöhten Strömungswiderstand entgegensetzt, so dass ein Großteil der Fluidströmung zur Kraftübertragung genutzt werden kann. Die Kraftübertragung ist besonders effektiv, da der schaufelartige Bereich des mindestens einen Rotorblatts weit von der Drehachse entfernt liegt, so dass hier auftreffende Fluidströmung eine größere Hebelwirkung hat. Auf der sich entgegen der Fluidströmung bewegenden Seite des Rotorblatts entsteht durch den eingeschlossenen Winkel von kleiner als 120°, beispielsweise 110° oder 100°, bevorzugt kleiner als 90°, beispielsweise 80°, eine besonders aerodynamische Form, wodurch der Strömungswiderstand auf dieser Seite verringert wird. So wird bei der Rückführung des Rotorblatts gegen die Fluidströmung weniger Kraft verbraucht. Besonders effizient ist diese Form des Rotorblatts, weil sie in einem Bereich fern der Drehachse angeordnet ist, da dort die höchste Drehgeschwindigkeit auftritt. Alternativ kann der zwischen der konvexen Seite des ersten Abschnitts und der konkaven Seite des zweiten Abschnitts eingeschlossene Winkel variabel ausgestaltet sein, beispielsweise indem beide Abschnitte beweglich aneinander angelenkt sind.

In bevorzugten Ausführungsformen ist an einer Oberkante und/oder an einer Unterkante von mindestens einem Rotorblatt, bevorzugt im Bereich des ersten Abschnitts, mindestens ein Flügelelement beweglich angeordnet. Das Flügelelement ist bevorzugt derart angeordnet, dass es, wenn die Fluidströmung auf die Vorderseite des Rotorblatts trifft, hochklappt und auf diese Weise die Fläche des Rotorblatts vergrößert. Dadurch kann die Fluidströmung noch besser von dem Rotorblatt aufgenommen werden. Bei der Rückführung des Rotorblatts gegen die Fluidströmung klappt das Flügelelement aufgrund der Fluidströmung, die auf die Rückseite des Flügelelements trifft, in Richtung der Vorderseite des Rotorblatts, so dass keine zusätzliche Fläche entsteht und das Rotorblatt bei Bewegung gegen die Fluidströmung somit keinen größeren Strömungswiderstand aufweist. Auf diese Weise kann der Wirkungsgrad des Rotors noch weiter verbessert werden. Es ist bevorzugt derart ausgebildet, dass es von der Fluidströmung nicht über die Ober- bzw. Unterkante hinaus in den Bereich der Rückseite des Rotorblatts gedrückt werden kann. Bevorzugt umfassen mehrere oder jedes Rotorblatt jeweils mindestens ein Flügelelement. Ganz besonders bevorzugt ist jeweils mindestens ein Flügelelement beweglich an der Oberkante und an der Unterkante des Rotorblatts angeordnet. Das Flügelelement kann beispielsweise mittels einer Schwenkachse schwenkbar angelenkt sein und/oder aus einem flexiblen Material gefertigt sein. Es kann sich bevorzugt entlang eines oder mehrerer Teilabschnitte oder durchgängig entlang der gesamten Länge der Ober- und/oder Unterkante des ersten Abschnitts des Rotorblatts erstrecken.

Vorteilhafterweise ist an der Seite, bevorzugt an der konvexen Seite des zweiten Abschnitts, des Rotorblatts mindestens ein Fähnchenelement beweglich angeordnet. Das Fähnchenelement ist derart angeordnet, dass sein freies Ende von der Seite des Rotorblatts absteht, wenn sich das Rotorblatt mit der Fluidströmung bewegt. Dadurch steht eine zusätzliche Fläche zur Aufnahme der Fluidströmung an der Vorderseite des Rotorblatts zur Verfügung. Wird das Rotorblatt gegen die Fluidströmung zurück geführt, liegt das Fähnchenelement dicht an der Seite des Rotorblatts an und verringert dadurch den Strömungswiderstand des Rotorblatts bei der Rückführung. So kann der Wirkungsgrad zusätzlich erhöht werden.

Die vorliegende Erfindung soll unter Bezugnahme auf ein bevorzugtes Ausführungsbeispiel näher erläutert werden. Dazu zeigen schematisch
- Figur 1A: eine Windturbine gemäß einem ersten Beispiel der vorliegenden Erfindung in einer Schnittdarstellung entlang der Linie I-I aus Figur 2;
- Figur 1B: eine Windturbine gemäß einem zweiten Beispiel der vorliegenden Erfindung in einer Schnittdarstellung entlang der Linie I-I aus Figur 2;
- Figur 2: eine Windturbine gemäß dem ersten Beispiel in einer Draufsicht;
- Figur 2A: eine Detailansicht eines Fluidschlitzes aus Figur 2;
- Figur 3: eine Windturbine gemäß dem ersten Beispiel in einer Schnittdarstellung entlang der Linie III-III aus Figur 2;
- Figur 4: einen Rotor gemäß einem dritten Beispiel der vorliegenden Erfindung in einer Draufsicht;
- Figur 5: eine Windturbine gemäß einem vierten Beispiel in einer Draufsicht; und
- Figur 6: eine Windturbine gemäß einem fünften Beispiel in einer Draufsicht.

Die Erfindung soll beispielhaft anhand von Ausführungen erläutert werden, die als Windturbine bzw. Rotor für eine Windturbine ausgebildet sind. Die folgenden Erläuterungen gelten ebenso für Rotoren und Turbinen für beliebige andere Fluide, insbesondere Wasser.

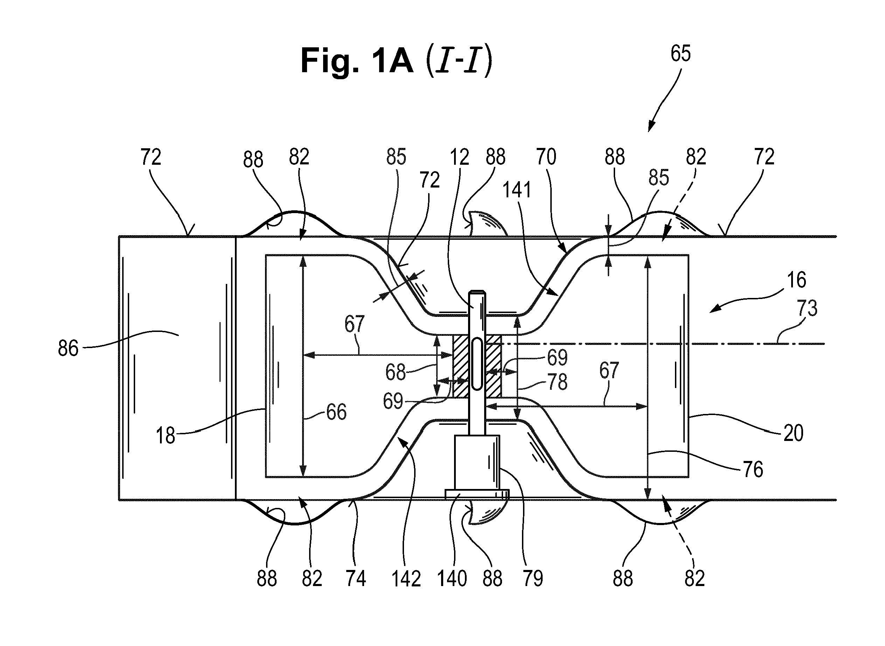

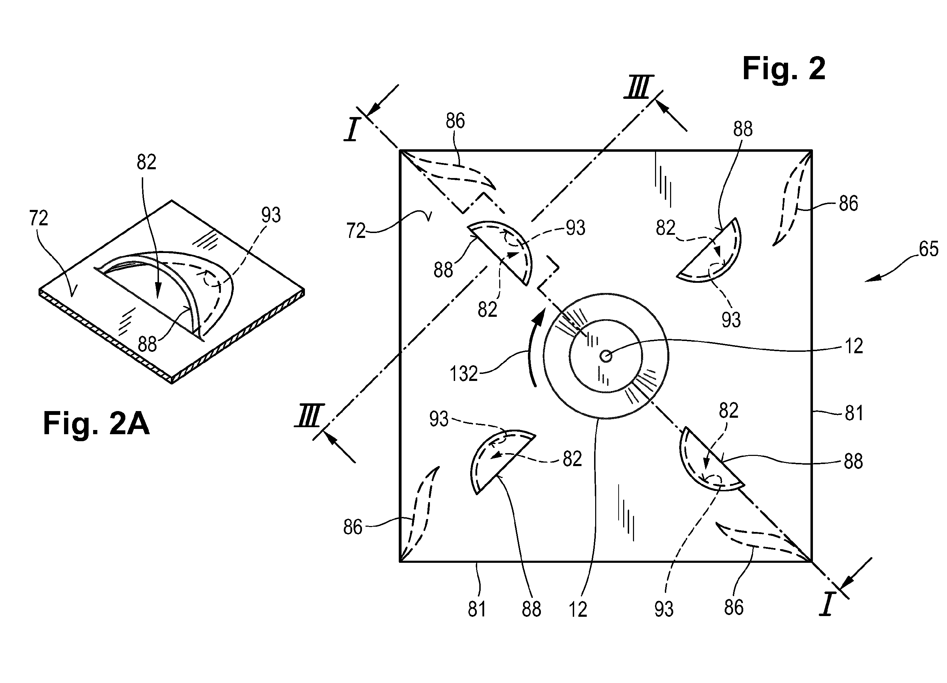

Figur 1A zeigt eine Windturbine 65 gemäß einem ersten Beispiel in einer Schnittdarstellung entlang der Linie I-I aus Figur 2. Die Windturbine 65 umfasst ein Gehäuse 70, in dem der Rotor 16 relativ zum Gehäuse 70 drehbar angeordnet ist. Die in Figur 1A gezeigte Darstellung umfasst zwei Rotorblätter 18, 20, die jeweils eine erste Höhe 68 in einem ersten Abstand 69 parallel zur Drehachse 12 und eine zweite Höhe 66 in einem zweiten Abstand 67 parallel zur Drehachse 12 aufweisen. Der erste Abstand 69 und die erste Höhe 68 sind dabei kleiner als der zweite Abstand 67 und die zweite Höhe 66, so dass sich die Rotorblätter 18, 20 zur Drehachse 12 hin verjüngen. Dadurch entstehen eine obere und eine untere Nabeneinsenkung 141, 142 des Rotors 16. In alternativen Ausführungsformen kann statt einer kontinuierlichen Verjüngung beispielsweise auch eine Stufe vorgesehen sein. Die Verjüngung der Rotorblätter 18, 20 zur Drehachse 12 hin erfolgt bevorzugt nicht linear, sondern die zweite Höhe 66 ist in einem definierten Bereich konstant und fällt dann in Form einer Kurve auf die erste Höhe 68 ab. Bevorzugt ist die Verjüngung, wie hier dargestellt, symmetrisch zu einer Längsachse 73 des Rotorblatts 18, 20 senkrecht zur Drehachse 12. Die ersten und zweiten Höhen 68, 66 sind radialsymmetrisch angeordnet, das heißt, die ersten Höhen 68 und die zweiten Höhen 66 sind bei den beiden Rotorblättern 18, 20 jeweils gleich und im jeweils gleichen Abstand 69, 67 von der Drehachse 12.

Das Gehäuse 70 umfasst eine Oberseite 72 und eine Unterseite 74, die im wesentlichen senkrecht zur Drehachse 12 angeordnet sind. Das Gehäuse 70 weist einen ersten Abstand 78 einen ersten Abstand 78 zwischen Ober- und Unterseite 72, 74 des Gehäuses 70 im ersten Abstand 69 parallel zur Drehachse 12 und einen zweiten Abstand 76 zwischen Oberund Unterseite 72, 74 des Gehäuses 70 im zweiten Abstand 67 parallel zur Drehachse 12 auf. Dabei ist der erste Abstand 69 parallel zur Drehachse 12 und der erste Abstand 78 zwischen Ober- und Unterseite 72, 74 des Gehäuses 70 kleiner als der zweite Abstand 67 parallel zur Drehachse 12 und der zweite Abstand 76 zwischen Ober- und Unterseite 72, 74 des Gehäuses 70. Der Abstand 85 zwischen der Oberseite 72 des Gehäuses 70 und den Rotorblättern 18, 20, 22 und zwischen der Unterseite 74 des Gehäuses 70 und den Rotorblättern 18, 20, 22 ist bevorzugt im Wesentlichen konstant. Das Gehäuse 70 ist somit an die Nabeneinsenkungen 141, 142 des Rotors 16 angepasst. Durch die Verjüngung des Gehäuses 70 wird der Venturi-Effekt erzeugt, durch den die Windströmung auf die Außenseiten der Rotorblätter 18, 20 gelenkt wird, um so den Wirkungsgrad der Windturbine zu erhöhen, da die Außenseiten der Rotorblätter 18, 20 eine höhere Hebelwirkung aufweisen.

In einem Bereich unterhalb der unteren Nabeneinsenkung 142 unter der Unterseite 74 des Gehäuses 70 ist im in Figur 1A dargestellten Beispiel ein Generator 79 an der Drehachse 12 angeordnet, der mit einem Generatorflansch 140 drehfest auf einer hier nicht dargestellten Stützkonstruktion, beispielsweise einem Tragelement oder einem Mast, angeordnet ist und die Rotation des Rotors 16 in elektrische Energie umwandelt. Das Tragelement kann z. B. eine ähnliche Größe wie das Gehäuse 70 aufweisen, um das Gehäuse 70 in der Nähe des Bodens oder einer anderen Fläche, z. B. auf einem Dach zu befestigen. Alternativ kann der Generator 79 auch oberhalb des Gehäuses 70 an dessen Oberseite 72 oberhalb der oberen Nabeneinsenkung 141 angeordnet sein. Der Generator 79 ist dort im Wesentlichen windgeschützt. Der Bereich oberhalb der oberen Nabeneinsenkung 141 und/oder der Bereich unterhalb der unteren Nabeneinsenkung 142, in dem der Generator 79 in diesem Beispiel angeordnet ist, kann auch abgedeckt werden, beispielsweise durch eine Platte, wodurch der Generator 79 auch vor weiteren Witterungen, wie z. B. Regen, oder bei einer Anordnung im Wasser vor dem das Gehäuse 70 umgebenden Wasser geschützt werden kann.

In Figur 1A sind außerdem Fluidschlitze 82 dargestellt, die jeweils im Bereich, in dem sich die Außenseiten der Rotorblätter 18, 20 bewegen, an der Oberseite 72 und Unterseite 74 des Gehäuses 70 angeordnet sind. Über den Fluidschlitzen 82 ist ein Abdeckelement 88 angeordnet, wodurch eine Öffnung entsteht. Das Abdeckelement 88 kann beispielsweise durch eine Ausbuchtung der Oberseite 72 oberhalb der Fluidschlitze 82 an der Oberseite 72 bzw. eine Ausbuchtung der Unterseite 74 unterhalb der Fluidschlitze 82 an der Unterseite 74 gebildet werden. Die oder jede Öffnung kann auch durch Entfernen eines Teils der Oberseite 72 bzw. Unterseite 74, wodurch ein Fluidschlitz 82 entsteht, und Anformen eines entsprechenden, separaten Abdeckelements gebildet werden, wodurch sich die Richtung der Öffnung ergibt. Die Richtung der Öffnung der Fluidschlitze 82 richtet sich bevorzugt nach der Drehrichtung des Rotors 16, wie in Verbindung mit Figur 2 näher beschrieben wird, von dem in dieser Darstellung nur die Drehachse 12 sichtbar ist. Da gerade der Bereich der Außenseiten der Rotorblätter 18, 20, fern der Drehachse, eine große Hebelwirkung aufweist, ist zusätzlicher Eintrag von Windströmung auf der Vorderseite und Abführen von Windströmung auf der Rückseite der Rotorblätter 18, 20 hier besonders effektiv. Bei den Fluidschlitzen 82, die in dieser Darstellung auf der linken Seite des Gehäuses 70 angeordnet sind, weist die Öffnung aus der Zeichenebene hinaus. Auf der in dieser Darstellung rechten Seite des Gehäuses 70 weisen die Öffnungen der dort angeordneten Fluidschlitze 82 in die Zeichenebene hinein. Die mittig dargestellten Abdeckelemente 88 sind in einer Seitenansicht dargestellt, sie befinden sich im Hintergrund der Schnittlinie I-I aus Figur 2 und formen eine Öffnung für die dort angeordneten Fluidschlitze (in Figur 1A nicht sichtbar). In alternativen Ausführungsformen können die Fluidschlitze 82 auch oberhalb der oberen und unterhalb der unteren Nabeneinsenkungen 141, 142 bis in den Bereich der Drehachse 12 des Rotors 16 ausgebildet sein oder es können mehrere Fluidschlitze 82 nebeneinander angeordnet sein.

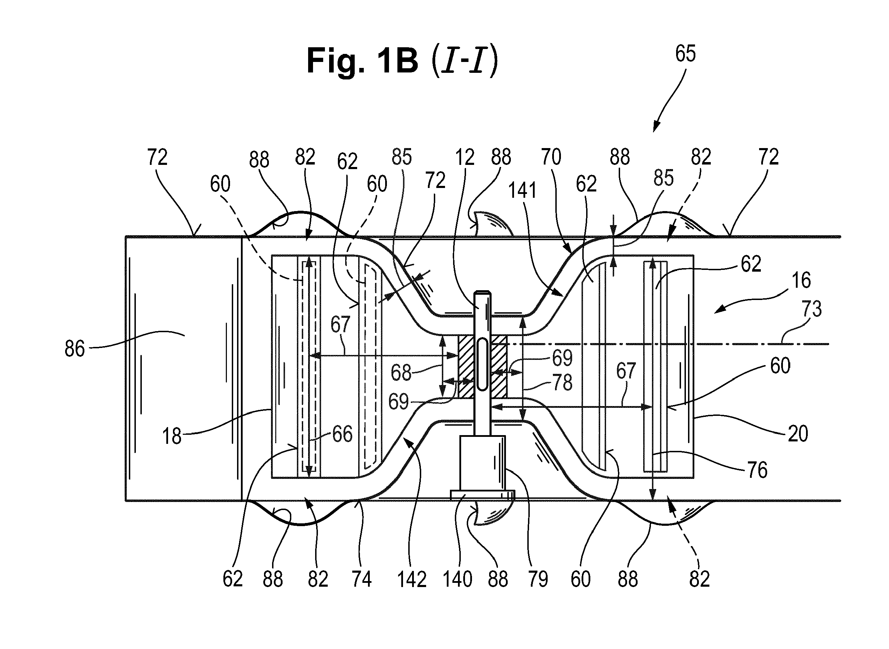

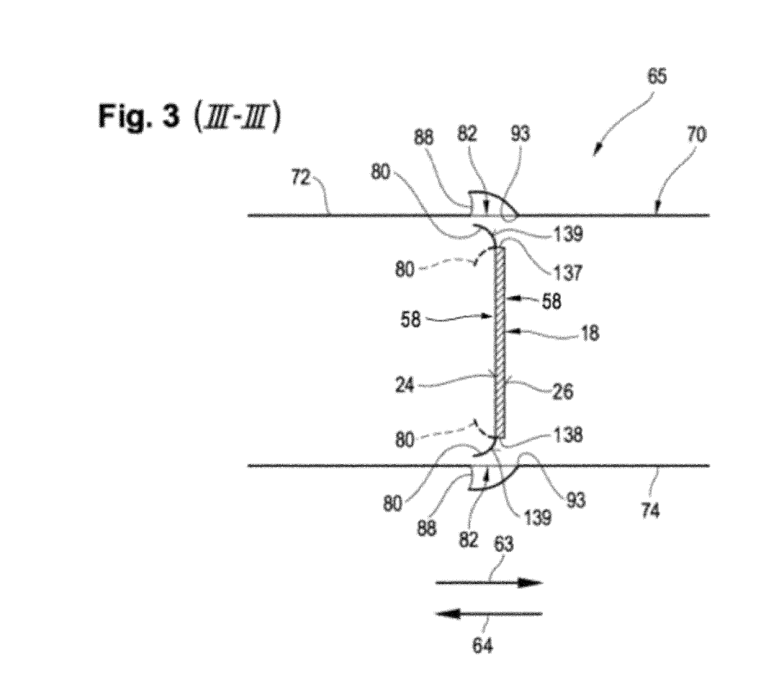

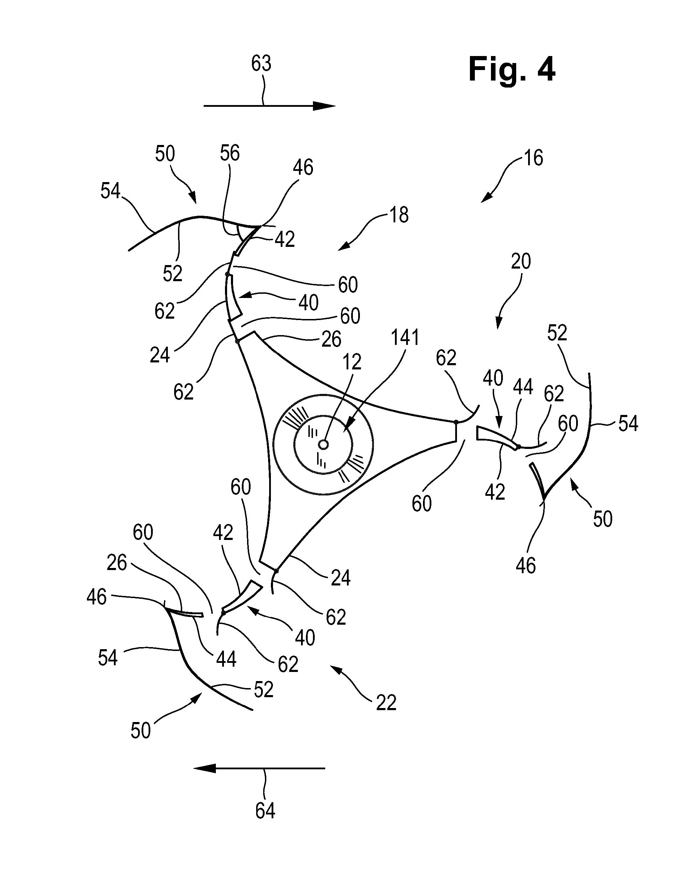

Figur 1B zeigt eine Windturbine 65 gemäß einem zweiten Beispiel der vorliegenden Erfindung in einer Schnittdarstellung entlang der Linie I-I aus Figur 2. Das in Figur 1 B gezeigten Beispiel entspricht im wesentlichen dem aus Figur 1A, jedoch umfasst bei dem in Figur 1B dargestellten Ausführungsbeispiel jedes Rotorblatt 18, 20 zusätzlich jeweils zwei Öffnungen 60 mit einem öffenbaren Schließelement 62, die in diesem Ausführungsbeispiel im Bereich der zweiten Höhe 66 und im Bereich, in dem die Nabeneinsenkungen 141, 142 der Rotorblätter 18, 20 auf die erste Höhe 68 beginnen, angeordnet sind. Die Schließelemente 62 am hier links dargestellten Rotorblatt 18 sind geschlossen dargestellt, welches einer Stellung entspricht, die die Schließelemente 62 einnehmen, wenn die Richtung der Windströmung in die erste Richtung 63 (Figur 3) weist und sich auch das Rotorblatt 18 in die erste Richtung 63 bewegt. Daher sind die Öffnungen 60, die durch die Schließelemente 62 verdeckt werden, mit gestrichelten Linien dargestellt. Die Schließelemente 62 am hier rechts dargestellten Rotorblatt 20 sind geöffnet, da sich das Rotorblatt 20 in die zweite Richtung 64 (Figur 3) entgegen der Windströmung bewegt. Durch die Öffnung 60 sieht man einen Teil des geöffneten Schließelements 62, welches sich, wie auch in Fig. 4 gezeigt, in die Zeichenebene hinein biegt.

Die Windturbine 65 gemäß dem ersten Beispiel der vorliegenden Erfindung kann alternativ zu Luft auch mit jedem anderen Fluid, beispielsweise mit Wasser betrieben werden.

Figur 2 zeigt die Windturbine 65 gemäß dem ersten Beispiel in einer Draufsicht. Die Oberund Unterseite 72, 74 sind in diesem Beispiel an den Außenkanten 81 quadratisch, wobei hier weder die Unterseite 74 noch die Rotorblätter dargestellt sind, so dass man die Oberseite 72 sieht. An der Oberseite 72 sind in diesem Ausführungsbeispiel vier Fluidschlitze 82 angeordnet. Statt der vier Fluidschlitze 82 an der Oberseite 72 können in weiteren bevorzugten Ausführungsformen auch nur eins, zwei, drei, aber auch fünf, sechs oder mehr Fluidschlitze 82 an der Oberseite 72 angeordnet sein. Genauso kann ein oder mehrere Fluidschlitze 82 auch an der Unterseite 74 des Gehäuses 70 angeordnet sein, wie beispielsweise auch in den Figuren 1A, 1B gezeigt wird. Die Richtung der Öffnung der Fluidschlitze 82, die durch die Anordnung des Abdeckelements 88 entsteht, richtet sich bevorzugt nach der Drehrichtung 132 des Rotors, von dem in dieser Darstellung nur die Drehachse 12 sichtbar ist. Die Öffnung der Fluidschlitze 82 korrespondiert mit der Drehrichtung 132 des Rotors, das heißt, die Rotorblätter 18, 20 (siehe Figuren 1A, 1B) passieren unterhalb des jeweiligen Fluidschlitzes 82 der Oberseite 72 bzw. oberhalb des jeweiligen Fluidschlitzes 82 der Unterseite 74 (siehe Figuren 1A, 1B) jeweils zuerst den Bereich der Öffnung und dann ein hinteres Ende 93 des Fluidschlitzes 82. Die Drehrichtung 132 entspricht dabei der Vorzugsdrehrichtung des Rotors. Figur 2A zeigt eine Detailansicht eines Fluidschlitzes 82 auf der Oberseite 72 des Gehäuses 70.

In Figur 3 ist die Windturbine 65 gemäß dem ersten Beispiel in einer Schnittdarstellung entlang der Linie III-III aus Figur 2 dargestellt. Dabei wird ein Stützelement 86 (siehe Figur 2), das sich perspektivisch hinter dem Rotorblatt 18 befindet, wegen der besseren Übersichtlichkeit nicht dargestellt. An einer Oberkante 137 und an einer Unterkante 138 des hier dargestellten Rotorblatts 18 ist jeweils ein Flügelelement 80 beweglich angeordnet. Die Flügelelemente 80 sind durch die Windströmung einerseits in Richtung der Ober- bzw. Unterseite 72, 74 des Gehäuses 70 hochklappbar, wenn die Windströmung auf die Vorderseite 24 des Rotorblatts 18 trifft und dieses in die erste Richtung 63 bewegt. Dadurch vergrößert sich die Fläche des Rotorblatts 18, auf das die Windströmung trifft, so dass diese von dem Rotorblatt 18 noch besser aufgenommen werden kann. Die Flügelelemente 80 können aus starrem oder flexiblem, insbesondere elastischem Material ausgebildet sein und alternativ zu der in Figur 3 dargestellten, einfach gebogenen Form auch teilweise gerade, gerade oder mehrfach gebogen sein. Sie sind insgesamt derart ausgeformt und beweglich angeordnet, dass in der hochgeklappten Stellung ein Luftspalt, beispielsweise in der Größenordnung von einigen Millimetern, verbleibt, so dass die Windströmung zirkulieren kann und sich kein schädlicher Luftstau bildet. Das heißt, die Höhe des hochgeklappten Flügelelements 80 entspricht etwas weniger als dem Abstand 85 (siehe Figuren 1A, 1B) zwischen der Oberseite 72 bzw. der Unterseite 74 des Gehäuses 70 und dem hier dargestellten Rotorblatt 18. Das Flügelelement 80 kann bevorzugt nicht über die Ober- bzw. Unterkante 137, 138 des Rotorblatts 18 hinaus in Richtung der Rückseite 26 des Rotorblatts 18 geklappt werden.

Andererseits sind die Flügelelemente 80 einklappbar, wenn die Windströmung auf die Rückseite 26 des Rotorblatts 18, und somit auf die Rückseite 139 des Flügelelements 80, trifft, wenn sich das Rotorblatt 18 in die zweite Richtung 64 entgegen der Windströmung bewegt. Diese eingeklappte Stellung ist in Figur 3 beispielhaft anhand einer gestrichelten Linie dargestellt. Bei eingeklappter Stellung der Flügelelemente 80 kann die Windströmung wesentlich stärker zwischen Flügelelementen 80 und dem Rotorblatt 20 entweichen, als bei hochgeklappter Position des Flügelelements 80, wodurch ein geringerer Druck auf die Rückseite 26 des Rotorblatts 20 wirkt.

Die Flügelelemente 80 können sich entlang eines oder mehrerer Teilabschnitte oder durchgängig entlang der gesamten Länge der Ober- und/oder Unterkante 137, 138 des Rotorblatts 18 erstrecken, z. B. im Bereich des ersten Abschnitts 40 (Figur 4) des Rotorblatts 18. Sie können beispielsweise mittels einer Schwenkachse schwenkbar angelenkt sein und/oder aus einem elastischen Material gefertigt sein.

In Figur 3 sind außerdem Fluidschlitze 82 dargestellt, die an der Oberseite 72 und Unterseite 74 des Gehäuses 70 angeordnet sind. Die Fluidschlitze 82 haben ihre durch das Abdeckelement 88 ausgerichtete Öffnung so, dass sich eine Windströmung in die zweite Richtung 64 über die Fluidschlitze 82 hinweg bewegt. Aufgrund des Bernoulli-Effekts entsteht durch die Windströmung ein Sog, wodurch Luft aus dem Gehäuse 70 durch die Fluidschlitze 82 heraus gesaugt wird. Wenn sich das Rotorblatt 18 in die zweite Richtung 64 gegen die Windströmung bewegt, wird dadurch die Rückführung des Rotorblatts 18 gegen die Windströmung erleichtert, da der Druck auf die Rückseite 26 des Rotorblatts 18 in diesem Bereich verringert wird. Eine Windströmung in die erste Richtung 63 kann durch die Öffnung in das Gehäuse 70 und auf die Vorderseite 24 des Rotorblatts 18 gelangen. Durch den zusätzlichen Eintrag von Windströmung auf die Vorderseite 24 des Rotorblatts 18 wird der Rotor effektiver angetrieben. Da die ersten Höhen 68 (Figur 1) und zweiten Höhen 66 (Figur 1) der Rotorblätter 18 und 16 (Figur 1) radialsymmetrisch angeordnet sind, wird der Über- oder Unterdruck, der unter anderem aufgrund der Fluidströmung durch die Fluidschlitze 82 an der Vorder- oder Unterseite 24, 26 der Rotorblätter generiert wird, im wesentlichen gleich über die jeweiligen Rotorblattflächen 58 verteilt. Dadurch kann eine Unwucht in der Rotation des Rotors vermieden werden, wodurch der Rotor besonders effektiv angetrieben werden kann.

An der Ober- und Unterseite 72, 74 des Gehäuses 70 können alternativ auch mehrere Fluidschlitze 82 mit Abdeckelementen 88 angeordnet sein, wie auch in den Beispielen in den Figuren 1 und 2 gezeigt wird.

In Figur 4 ist ein Rotor 16 gemäß einem dritten Beispiel der vorliegenden Erfindung in einer Draufsicht dargestellt. In diesem Beispiel umfasst der Rotor 16 eine vertikale Drehachse 12, die in dieser Darstellung in die Zeichenebene hinein geht, und drei Rotorblätter 18, 20, 22, die an der Drehachse 12 angeordnet sind. Alternativ können auch zwei, vier, fünf oder mehr Rotorblätter anstelle der drei Rotorblätter 18, 20, 22 an der Drehachse 12 angeordnet sein. Im hier dargestellten Beispiel umfasst jedes Rotorblatt 18, 20, 22 einen gekrümmten ersten Abschnitt 40, der eine konkave Seite 42 und eine konvexe Seite 44 aufweist. An dem der Drehachse 12 abgewandten Ende 46 des ersten Abschnitts 40 ist ein gekrümmter zweiter Abschnitt 50 angeordnet, der eine konkave Seite 52 und eine konvexe Seite 54 aufweist. Der erste und zweite Abschnitt 40, 50 sind derart angeordnet, dass in radialer Richtung auf die konvexe Seite 44 des ersten Abschnitts 40 die konkave Seite 52 des zweiten Abschnitts 50 folgt. Der zweite Abschnitt 50 ist bevorzugt direkt, das heißt ohne Luftspalt oder ähnliches, an den ersten Abschnitt 40 angeformt. Zwischen der konvexen Seite 44 des ersten Abschnitts und der konkaven Seite des zweiten Abschnitts 50 ist ein Winkel 56 eingeschlossen, der im hier dargestellten Beispiel kleiner als 90° ist. Der eingeschlossene Winkel 56 kann in alternativen Ausführungsformen auch zwischen 90° und 120° liegen, beispielsweise 95°, 100°, 105°, 110° oder 115° oder ein Winkel dazwischen sein. In weiteren alternativen Ausführungsformen kann der eingeschlossene Winkel 56 auch variabel sein, beispielsweise indem der erste und zweite Abschnitt 40, 50 beweglich aneinander angelenkt sind, insbesondere derart dass der Winkel 56 zeitweise auf Winkel deutlich kleiner 90° bis zu 0° reduziert wird. Dadurch kann der Widerstand gegen die Fluidströmung beim Bewegen des jeweiligen Rotorblatts 18, 20, 22 gegen die Strömungsrichtung weiter minimiert werden. Durch die Anordnung des zweiten Abschnitts 50 an den ersten Abschnitt 40 wird an der Vorderseite 24 des Rotorblatts 18, 20, 22 eine Art Schaufel für die Fluidströmung gebildet. Hier und in den folgenden Beispielen wird von einer Windströmung als Fluidströmung ausgegangen. Die Rotorblätter können jedoch mit einer Strömung aus jedem beliebigen Fluid, bevorzugt mit Luft oder Wasser angetrieben werden. Da die Schaufel im drehachsenfernen Bereich ausgebildet ist, kann die dort auftreffende Windströmung besonders effektiv genutzt werden, weil sie eine größere Hebelwirkung besitzt. An der Rückseite 26 des Rotorblatts 18, 20, 22 wird an dem Ende 46 des ersten Abschnitt 40 eine Spitze gebildet, die einen günstigen Strömungswiderstandskoeffizienten aufweist. Bei der Ausführung mit beweglicher Anlenkung der Abschnitte 40, 50 und variablem Winkel 56 kann der Drehpunkt zwischen den beiden Abschnitten 40, 50 am Ende 46 angeordnet sein. Insbesondere für Anwendungen in Fluiden mit höherer Dichte wie etwa Wasser kann das Ende 46 anstatt als Spitze als Wulst ausgebildet sein. Die Spitze bzw. die Wulst bildet eine vorstehende Kante, die in die Vorzugsdrehrichtung des Rotors 16 weist. Bei der hier gezeigten Anordnung entspricht die Vorzugsdrehrichtung einer Drehung des Rotors 16 mit dem Uhrzeigersinn.

In alternativen Ausführungsformen muss nicht jedes Rotorblatt 18, 20, 22 einen ersten und zweiten Abschnitt 40, 50 wie oben beschrieben aufweisen, sondern es kann auch nur eins oder zwei von drei Rotorblättern oder eine beliebige Anzahl von Rotorblättern bei einem Rotor mit mehr als drei Rotorblättern einen derartigen ersten und zweiten Abschnitt 40, 50 aufweisen.

Der zweite Abschnitt 50 hat am Übergang zum ersten Abschnitt 40 bevorzugt die gleiche Höhe, z. B. die zweite Höhe 66 (siehe Figuren 1A, 1B) wie der erste Abschnitt 40 in diesem Bereich. In Richtung des dem ersten Abschnitt 40 abgewandten Endes des zweiten Abschnitts 50 kann sich die Höhe des zweiten Abschnitts 50 verringern oder konstant bleiben.

Im ersten Abschnitt 40 der Rotorblätter 18, 20, 22 sind im hier dargestellten Beispiel jeweils zwei Öffnungen 60 mit einem öffenbaren Schließelement 62 angeordnet. Das Schließelement 62 ist jeweils so angeordnet, dass es die Öffnung 60 verschließt, wenn sich das Rotorblatt 18, 20, 22 in eine erste Richtung 63 bewegt, die der Richtung der Windströmung entspricht, und dass es die Öffnung 60 freigibt, wenn sich das Rotorblatt 18, 20, 22 in eine zweite Richtung 64 bewegt, die der Richtung entgegen der Windströmung entspricht. Die Drehung des Rotors 16 erfolgt im hier dargestellten Beispiel in Vorzugsdrehrichtung, das heißt mit dem Uhrzeigersinn. Im in Figur 4 dargestellten Beispiel sind an jedem Rotorblatt 18, 20, 22 jeweils zwei Öffnungen 60 mit Schließelement 62 im ersten Abschnitt 40 angeordnet. Es können alternativ auch eine, drei, vier oder mehr Öffnungen 60 mit jeweiligem Schließelement 62 im ersten Abschnitt 40 des Rotorblatts 18, 20, 22 vorgesehen sein. Das Schließelement 62 ist im hier gezeigten Ausführungsbeispiel als Klappe ausgebildet und aus einem flexiblen Material, das sich biegen lässt und bevorzugt elastisch ist. Die Klappe kann aber auch aus einem starren Material angefertigt sein. Die Klappe ist im in Figur 4 dargestellten Beispiel mit einem Ende an der der Drehachse 12 jeweils näheren Seite der Öffnung 60 drehbar aufgehängt, wobei das andere Ende der Klappe radial nach außen zeigt. Verschließt die Klappe die Öffnung 60, liegt das radial nach außen zeigende Ende der Klappe beispielsweise auf dem ersten Abschnitt 40 des Rotorblatt 18, 20, 22 neben der Öffnung 60 auf. Die in diesem Ausführungsbeispiel gezeigte Klappe ist bevorzugt an der Vorderseite 24 des Rotorblatts 18, 20, 22 angeordnet, so dass sie gegen den ersten Abschnitt 40 des Rotorblatts 18, 20, 22 gedrückt wird und dadurch die Öffnung 60 verschließt, wenn sich das Rotorblatt 18, 20, 22 in Richtung der Windströmung bewegt. Wird das Rotorblatt 18, 20, 22 in die zweite Richtung 64 gegen die Windströmung bewegt, gibt die Klappe die Öffnung automatisch frei, da die Windströmung, die von der Rückseite 26 des Rotorblatts 18, 20, 22 durch die Öffnungen 62 dringt, gegen die Klappe drückt, so dass diese aufschwingt. Auf diese Weise wird der Strömungswiderstand der Rückseite 26 des Rotorblatts 18, 20, 22 verringert.

Im Bereich der Drehachse 12 weist der Rotor 16 Nabeneinsenkungen 141, 142 auf, wobei in der Draufsicht in Fig. 4 nur die obere Nabeneinsenkung 141 darstellbar ist. Zusätzlich kann der Rotor 16 im Bereich der Drehachse 12 auch Aussparungen aufweisen, durch die die Windströmung hindurchströmen kann, um eine zu starke Anstauung der Windströmung zu vermeiden.

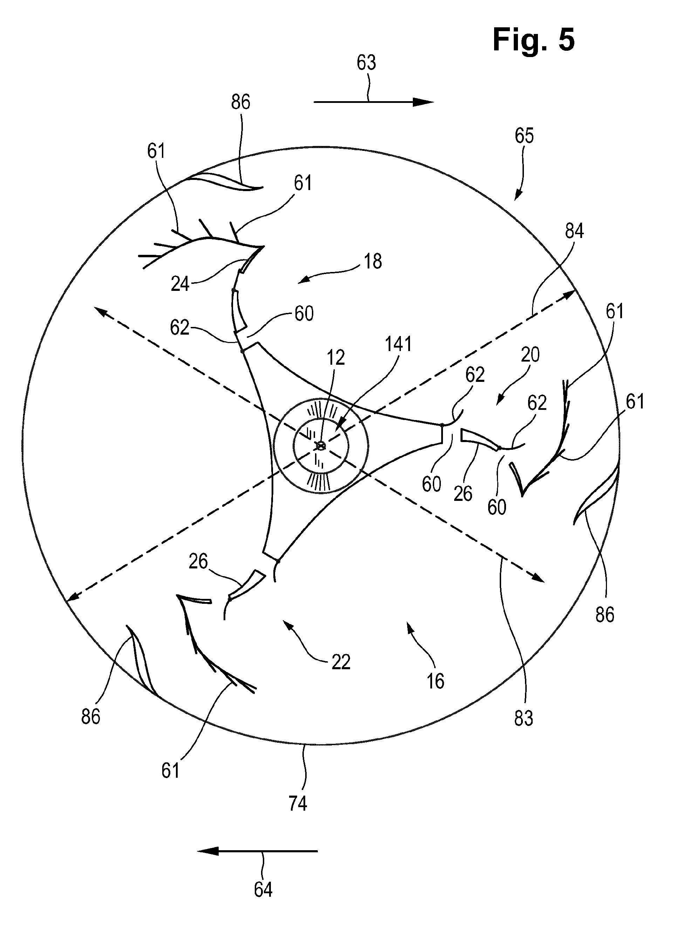

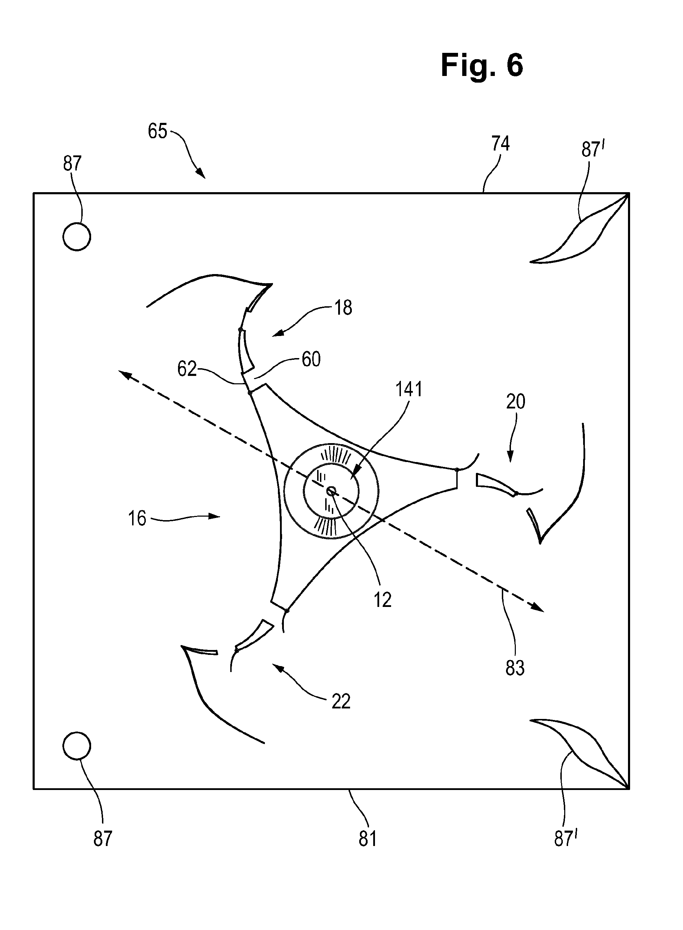

In den Figuren 5 und 6 sind Windturbinen 65 mit einem Gehäuse 70 gemäß einem vierten bzw. fünften Ausführungsbeispiel der vorliegenden Erfindung in einer Draufsicht gezeigt.

In Figur 5 umfasst das Gehäuse 70 eine im Außenradius kreisförmige Ober- und Unterseite 72, 74. Zur besseren Darstellung fehlt jedoch in Figur 5 die Oberseite 72, so dass der darunterliegende Rotor 16 sichtbar ist. Der Durchmesser 84 der Ober- und Unterseite 72, 74 ist bevorzugt größer als der Durchmesser 83 des Drehkreises der Rotorblätter 18. Zwischen der in Figur 5 dargestellten Ober- und Unterseite 72, 74 des Gehäuses 70 sind in einem Bereich außerhalb des Drehkreises der Rotorblätter 18, 20, 22 bevorzugt Stützelemente 86 für die Ober- und Unterseite 72, 74 angeordnet, die durchgehend von der Oberseite 72 zur Unterseite 74 ausgebildet sind. Sie dienen hauptsächlich dazu, die Ober- und Unterseite 72, 74 abzustützen, so dass die Rotorblätter 18, 20, 22 frei zwischen Ober- und Unterseite 72, 74 des Gehäuses 70 rotieren können. Die Stützelemente 86 sind in diesem Ausführungsbeispiel geschwungen geformt, so dass sie die Fluidströmung lenken, damit diese beispielsweise in einem günstigen Winkel und/oder mit einer veränderten Geschwindigkeit auf die Rotorblätter 18, 20, 22 trifft, und/oder damit die Fluidströmung, die auf die Rotorblätter 18, 20, 22 trifft, nicht negativ, z. B. durch ungünstige Verwirbelungen, beeinflusst. Es können auch mehr oder weniger als die drei gezeigten Stützelemente 86, z. B. vier, fünf, sechs oder sieben, oder auch nur zwei Stützelemente 86 zwischen der Oberund Unterseite 72, 74 in gleichmäßigen oder beliebigen Abständen zueinander angeordnet sein. Die Stützelemente 86 reichen höchstens bis an den Drehkreis der Rotorblätter 18, 20, 22 heran und kontaktieren diese nicht. Der Rotor 16 entspricht im Wesentlichen dem in Figur 4 dargestellten Rotor mit jeweils zwei mit einem öffenbaren Schließelement 62 versehenen Öffnungen 60 an jedem Rotorblatt 18, 20, 22, jedoch sind in Figur 5 zusätzlich an der konvexen Seite 54 des zweiten Abschnitts 50 des Rotorblatts 18, 20, 22 jeweils fünf Fähnchenelemente 61 beweglich angeordnet. Die Anzahl der Fähnchenelemente ist beliebig, daher können in alternativen Ausführungsformen auch ein, zwei, drei, vier, sechs oder mehr Fähnchenelemente vorgesehen sein. Die Fähnchenelemente 61 stellen sich von der konvexen Seite 54 des Rotorblatts 18, 20, 22 ab, wenn sich dieses in Richtung der Windströmung, in diesem Fall in die erste Richtung 63, bewegt, da der Wind unter das Fähnchenelement 61 greift. Auf diese Weise wird die Fläche des Rotorblatts 18, 20, 22, die von der Windströmung in die erste Richtung 63 getroffen wird, vergrößert, die Windströmung kann also besser aufgenommen werden. Dies ist im drehachsenfernen Bereich besonders effektiv, da hier eine größere Hebelwirkung vorliegt. Dagegen liegen die Fähnchenelemente 61 dicht an der konvexen Seite 54 des zweiten Abschnitts 50 des Rotorblatts 18, 20, 22 an, wenn sich dieses in die zweite Richtung 64 gegen die Windströmung bewegt. Der Strömungswiderstand der Rückseite 26 des Rotorblatts 18, 20, 22 wird somit durch die Fähnchenelemente 61 nicht wesentlich vergrößert.

Die in Figur 5 dargestellte Windturbine 65 kann anstelle von Luft auch mit anderen Fluiden, bevorzugt z. B. mit Wasser betrieben werden.

In Figur 6 sind die Ober- und Unterseite 72, 74 des Gehäuses 70 an den Außenkanten 81 quadratisch ausgebildet, wobei auch hier die Oberseite 72 zur besseren Darstellung nicht dargestellt ist. Der Rotor 16 entspricht dem in Figur 4 gezeigten Rotor, bei dem jedes Rotorblatt 18, 20, 22 zwei Öffnungen 60, die mit einem öffenbaren Schließelement 62 verschließbar sind, aufweist. Die Ober- und Unterseite 72, 74 des Gehäuses 70 ragen an allen Seiten über den Durchmesser 83 des Drehkreises der Rotorblätter 18, 20, 22 hinaus. An den vier Ecken der Ober- und Unterseite sind Stützelemente 87, 87' zwischen der Oberund Unterseite 72, 74 angeordnet. Die von der Oberseite 72 zur Unterseite 74 durchgehenden Stützelemente 87, 87' können als Stangen, beispielsweise mit rundem Querschnitt, wie die hier auf der linken Seite dargestellten Stützelemente 87, ausgebildet sein, oder einen geschwungenen Querschnitt, wie die hier als alternative Ausführungsform auf der rechten Seite dargestellten Stützelemente 87', aufweisen, aber auch andere Formen, z. B. rechteckige oder keilförmige Querschnitte, aufweisen und dadurch Einfluss auf die Richtung der Windströmung nehmen. Die Anzahl der Stützelemente 87, 87' kann von der gezeigten abweichen, insbesondere größer sein, als in Figur 6 gezeigt. So können beispielsweise zwei, fünf, sechs, sieben oder mehr Stützelemente 87, 87' vorgesehen sein. Ansonsten dienen die Stützelemente 87, 87' der Abstützung der Ober- und Unterseite 72, 74 des Gehäuses 70, so dass die Rotorblätter 18, 20, 22 frei zwischen Ober- und Unterseite 72, 74 rotieren können.

In weiteren, hier nicht dargestellten, alternativen Ausführungsformen können die Oberseite und Unterseite des Gehäuses auch dreieckig sein oder mehr als vier Ecken aufweisen, es kann auch die Oberseite eine andere Form als die Unterseite aufweisen. Auch die in Figur 6 gezeigte Windturbine 65 kann alternativ mit einem anderen Fluid, beispielsweise mit Wasser, betrieben werden.

In ebenfalls hier nicht dargestellten, alternativen Ausführungsformen ist entlang der Oberseite und der Unterseite des Gehäuses von der Drehachse radial nach außen jeweils mindestens ein Klappenelement angeordnet, dessen Höhe parallel zur Drehachse dem Abstand zwischen der Oberseite bzw. der Unterseite des Gehäuses und den Rotorblättern entspricht. Bevorzugt ist das Klappenelement um einen Aufhängepunkt um maximal 90°, beispielsweise zwischen 0° und 90° oder zwischen 0° und 70°, aus einer Position parallel zur Drehachse in eine abgeklappte Position schwenkbar. Das Klappenelement ist bevorzugt derart angeordnet, dass es sich in der Position parallel zur Drehachse befindet, wenn sich das direkt zwischen den Klappenelementen an der Ober- und Unterseite befindende Rotorblatt mit der Fluidströmung bewegt. Dadurch wird der Strömungswiderstand für das Rotorblatt erhöht. Bewegt sich das Rotorblatt zwischen den Klappenelementen gegen die Fluidströmung, befindet sie sich in der abgeklappten Position. Auf diese Weise wird der Strömungswiderstand für das Rotorblatt verringert.

In weiteren hier nicht dargestellten Ausführungsformen kann bei dem Gehäuse außerdem eine Seitenwand vorgesehen sein, die sich abschnittsweise zwischen Ober- und Unterseite des Gehäuses erstreckt. Sie weist bevorzugt eine Fluideinlassöffnung und eine Fluidauslassöffnung auf und kann dazu dienen, die Rotorblätter vor ungünstigen Fluidströmungen abzuschirmen.

### Bezugszeichenliste

- 12: Drehachse
- 16: Rotor
- 18: Rotorblatt
- 20: Rotorblatt
- 22: Rotorblatt
- 24: Vorderseite
- 26: Rückseite
- 40: erster Abschnitt
- 42: konkave Seite
- 44: konvexe Seite
- 46: Ende des ersten Abschnitts
- 50: zweiter Abschnitt
- 52: konkave Seite
- 54: konvexe Seite
- 56: Winkel
- 58: Fläche
- 60: Öffnung
- 61: Fähnchenelement
- 62: Schließelement
- 63: erste Richtung
- 64: zweite Richtung
- 65: Windturbine
- 66: zweite Höhe
- 67: zweiter Abstand
- 68: erste Höhe
- 69: erster Abstand
- 70: Gehäuse
- 72: Oberseite
- 73: Längsachse
- 74: Unterseite
- 76: zweiter Abstand
- 77: Hohlraum
- 78: erster Abstand
- 79: Generator
- 80: Flügelelement
- 81: Außenkanten
- 82: Fluidschlitz
- 83: Durchmesser
- 84: Durchmesser
- 85: Abstand
- 86: Stützelemente
- 87: Stützelemente
- 87': Stützelemente
- 88: Abdeckelement
- 93: hinteres Ende des Fluidschlitzes
- 137: Oberkante
- 138: Unterkante
- 139: Rückseite des Flügelelements
- 140: Generatorflansch
- 141: obere Nabeneinsenkung
- 142: untere Nabeneinsenkung

## Patentansprüche

1. Fluidturbine mit einem Rotor, der eine vertikale Drehachse umfasst, an der mindestens zwei Rotorblättern angeordnet sind,
wobei der Rotor in einem Gehäuse angeordnet ist,
wobei eine Oberseite und eine Unterseite des Gehäuses im wesentlichen senkrecht zur Drehachse angeordnet sind,
wobei jedes Rotorblatt mindestens eine erste Höhe in einem ersten Abstand parallel zur Drehachse und eine zweite Höhe in einem zweiten Abstand parallel zur Drehachse aufweist, wobei der erste Abstand und die erste Höhe kleiner sind als der zweite Abstand und die zweite Höhe,
wobei der Rotor relativ zum Gehäuse drehbar ist,
wobei das Gehäuse mindestens einen ersten Abstand zwischen Ober- und Unterseite des Gehäuses in einem ersten Abstand parallel zur Drehachse und einen zweiten Abstand zwischen Ober- und Unterseite des Gehäuses in einem zweiten Abstand parallel zur Drehachse aufweist,
wobei der erste Abstand (69) parallel zur Drehachse (12) und der erste Abstand (78) zwischen Ober- und Unterseite des Gehäuses kleiner sind als der zweite Abstand parallel zur Drehachse und der zweite Abstand zwischen Ober- und Unterseite des Gehäuses,
**dadurch gekennzeichnet, dass** die ersten Höhen (68) und die zweiten Höhen (66) radialsymmetrisch angeordnet sind und dass an der Oberseite (72) und/oder der Unterseite (74) des Gehäuses (70) mindestens ein Fluidschlitz (82) angeordnet ist.

2. Fluidturbine nach Anspruch 1, **dadurch gekennzeichnet, dass** an der Oberseite (72) und/oder der Unterseite (74) des Gehäuses (70) mindestens zwei Fluidschlitze (82) angeordnet sind.

3. Fluidturbine nach Anspruch 1, **dadurch gekennzeichnet, dass** an der Oberseite (72) und an der Unterseite (74) des Gehäuses (70) mindestens zwei Fluidschlitze (82) angeordnet sind.

4. Fluidturbine nach einem der Ansprüche 1 bis 3, **dadurch gekennzeichnet, dass** der Abstand (85) zwischen der Oberseite (72) des Gehäuses (70) und den Rotorblättern (18, 20, 22) und zwischen der Unterseite (74) des Gehäuses (70) und den Rotorblättern (18, 20, 22) im Wesentlichen konstant ist.

5. Fluidturbine nach einem der Ansprüche 1 bis 4, **dadurch gekennzeichnet, dass** mindestens ein Rotorblatt (18, 20, 22) mindestens eine Öffnung (60) mit einem öffenbaren Schließelement (62) umfasst.

6. Fluidturbine nach einem der Ansprüche 1 bis 5, **dadurch gekennzeichnet, dass** mindestens ein Rotorblatt einen gekrümmten ersten Abschnitt (40) umfasst, wobei der erste Abschnitt (40) eine konkave Seite (42) und eine konvexe Seite (44) aufweist, und dass an dem der Drehachse (12) abgewandten Ende (46) des ersten Abschnitts (40) des Rotorblatts (18, 20, 22) ein gekrümmter zweiter Abschnitt (50) angeordnet ist, wobei der zweite Abschnitt (50) eine konkave Seite (52) und eine konvexe Seite (54) aufweist, und wobei die beiden Abschnitte (40, 50) derart angeordnet sind, dass in radialer Richtung auf die konvexe Seite (44) des ersten Abschnitts (40) die konkave Seite (52) des zweiten Abschnitts (50) folgt.

7. Fluidturbine nach Anspruch 6, **dadurch gekennzeichnet, dass** ein zwischen der konvexen Seite (44) des ersten Abschnitts (40) und der konkaven Seite (52) des zweiten Abschnitts (50) eingeschlossener Winkel (56) kleiner als 120° ist.

8. Fluidturbine nach einem der Ansprüche 1 bis 7, **dadurch gekennzeichnet, dass** an einer Oberkante (137) und/oder an einer Unterkante (138) von mindestens einem Rotorblatt (18, 20, 22) mindestens ein Flügelelement (80) beweglich angeordnet ist.

9. Fluidturbine nach einem der Ansprüche 1 bis 8, **dadurch gekennzeichnet, dass** an einer Seite von mindestens einem Rotorblatt (18, 20, 22) mindestens ein Fähnchenelement (61) beweglich angeordnet ist.
